# EUROPEAN PATENT APPLICATION

(11) **EP 2 808 279 A1**
(43) Date of publication of application: **03.12.2014**
(21) Application number: 12866443.0
(22) Date of filing: 25.01.2012
(51) Int. Cl.: B65H 7/14

(54) **MEDIUM DETECTION DEVICE AND MEDIUM CONVEYANCE DEVICE**

(71) Applicant: Fujitsu Frontech Limited, Inagi-shi Tokyo 206-8555 (JP)
(72) Inventor: YANAGIDA, Hiroshi, Inagi-shi Tokyo 206-8555 (JP); KOIZUMI, Shohei, Inagi-shi Tokyo 206-8555 (JP); HOSOYAMA, Koichi, Inagi-shi Tokyo 206-8555 (JP)
(74) Representative: Hoffmann Eitle
(86) International application number: PCT/JP2012/051531
(87) International publication number: WO 2013/111283

(57) **Abstract**

There is provided a low-cost medium detector which requires no additional parts.

A reflection plate (11a) is integrally formed with a medium guide (11) placed on a side opposite a side on which a reflective photosensor (17) is placed with a conveying path of banknotes (28) between. Light emitted from a light emitting portion of the reflective photosensor (17) is reflected from the reflection plate (11a) at the time of the absence of the banknotes (28) so as not to directly return to the reflective photosensor (17). This prevents the reflective photosensor (17) from erroneously detecting the medium guide (11) at the time of the absence of media on the basis of light reflected from the medium guide (11). The medium guide (11) and the reflection plate (11a) are integrally formed. Accordingly, additional parts or additional assembly is not required and a low-cost medium detector can be realized.

## Description

### Technical Field

The embodiments discussed herein are related to a medium detector and a medium conveying device and, more particularly, to a medium detector which is located in a place where paper sheet media, such as banknotes, are conveyed or held and which detects the passage or the presence or absence of the media and a medium conveying device including such a medium detector.

### Background Art

Usually separate type photosensors (photointerrupters) are used in automated teller machines and the like installed in financial institutions for detecting media such as banknotes. A separate type photosensor includes a light-emitting element and a light receiving element accommodated in independent packages. The light-emitting element and the light receiving element are arranged so that light emitted by the light-emitting element will be received directly by the light receiving element or indirectly by the light receiving element via a prism. Usually a light-emitting element and a light receiving element included in a separate type photosensor are arranged opposite each other with a path along which a medium passes or a space in which a medium is held between. The medium which passes along the path or which is held in the space cuts off light emitted by the light-emitting element, and the light receiving element cannot receive light. As a result, the presence of the medium is detected.

Such a separate type photosensor is excellent as a sensor for detecting a paper medium. However, it may be impossible to use such a separate type photosensor for detecting polymer banknotes (plastic banknotes) which each country has begun to introduce in recent years. That is to say, a polymer banknote has an area in which an optically variable device is placed for preventing forgery. Printing is not performed in this area, so this area is transparent. That is to say, this transparent area does not cut off but transmits light emitted by a light-emitting element. Therefore, a separate type photosensor cannot detect a polymer banknote, resulting in a malfunction of a medium conveying device.

On the other hand, reflective photosensors are known as sensors which are also effective in detecting transparent media. With a reflective photosensor a light-emitting element and a light receiving element are arranged so as to face the same direction. Light emitted by the light-emitting element strikes a medium and light reflected from the medium is received by the light receiving element. By doing so, the medium is detected. Usually detection distance is short for reflective photosensors, so they are used for detecting media at a short distance therefrom.

With a device which conveys banknotes in a bundle, however, it is desirable to use a reflective photosensor for which detection distance is long and for which a detection area is wide. A reflective photosensor can detect a medium which is in its detection area. However, its detection distance is long. As a result, when a medium is not in its detection area, the reflective photosensor may detect a medium guide, of medium guides which form a medium conveying path, opposite the reflective photosensor with the medium conveying path between.

The following reflective photosensor is known. In order to prevent a reflective photosensor from erroneously detecting a medium guide opposite the reflective photosensor as a medium, an optical antireflection means to prevent the reflection of light emitted from the reflective photosensor is placed outside the medium guide opposite the reflective photosensor (see, for example, PTL1). In this case, an opening is formed in the medium guide opposite the reflective photosensor. There is a concave portion in an inner part of the opening and the optical antireflection means to prevent the reflection of light emitted from the reflective photosensor is placed in the concave portion. A black sheet whose light reflection factor is low or paint with which coloring matter or absorbent that absorbs wavelengths of light emitted from the reflective photosensor is mixed is used as the optical antireflection means. As a result, when there is no medium, light emitted from the reflective photosensor is absorbed or diffused by the optical antireflection means. Therefore, a malfunction does not occur.

### Citation List

### Patent Literature

PTL1: Japanese Laid-open Patent Publication No. 2006-306609

### Summary of Invention

### Technical Problem

With the conventional medium detector, however, the concave portion is placed outside the medium guide which forms a medium conveying path, and the light antireflection means is placed in the concave portion. The concave portion and the light antireflection means are additional parts, so the costs become higher. In addition, various mechanisms are arranged outside the medium guide which forms the medium conveying path. Therefore, it may be impossible to secure a space for placing the concave portion.

The present invention was made in view of these problems. An object of the present invention is to provide a low-cost medium detector and medium conveying device which require no additional parts.

### Solution to Problem

In order to solve the above problems, there is provided, according to the present invention, a medium detector which detects paper sheet media and which includes a reflective photosensor placed so as to face the paper sheet media to be detected by a light emitting portion and a light receiving portion and a reflection portion which is formed in a medium guide placed opposite the reflective photosensor with the paper sheet media between and which reflects light emitted from the light emitting portion in a direction in which the light emitted from the light emitting portion does not return to the light receiving portion.

In addition, according to the present invention, there is provided a medium conveying device which conveys paper sheet media and which includes first and second medium guides which are arranged on both sides of the paper sheet media conveyed so as to form a conveying path of the paper sheet media, a reflective photosensor which is placed under the first medium guide and whose light emitting and light receiving portions are arranged so as to face the second medium guide, and a reflection portion which is integrally formed with the second medium guide and which reflects light emitted from the light emitting portion in a direction in which the light emitted from the light emitting portion does not return to the light receiving portion.

According to the above medium detector and medium conveying device, the reflection portion is formed in the medium guide placed opposite the reflective photosensor for reflecting light emitted from the light emitting portion in a direction by which the light emitted from the light emitting portion does not return to the light receiving portion. By forming the reflection portion in the medium guide, a low-cost medium detector and medium conveying device in which the reflective photosensor does not detect the medium guide placed opposite it are realized.

### Advantageous Effects of Invention

With the medium detector and the medium conveying device each having the above structure, the reflection portion which reflects light emitted from the light emitting portion of the reflective photosensor in a direction by which the light emitted from the light emitting portion does not return to the light receiving portion is integrally formed with the medium guide. Accordingly, the medium detector and the medium conveying device have the advantage of being able to prevent detection of a medium guide without using additional parts.

In addition, each of, for example, polymer banknotes (plastic banknotes) which each country has begun to introduce in recent years has a transparent area. However, the effect of being able to detect such banknotes in a conventional way is obtained.

The above and other objects, features and advantages of the present invention will become apparent from the following description when taken in conjunction with the accompanying drawings which illustrate preferred embodiments of the present invention by way of example.

### Brief Description of Drawings

[FIG. 1] FIG. 1 illustrates an example of the internal structure of a banknote processing section of an automated teller machine.
[FIG. 2] FIG. 2 is a perspective view which illustrates the appearance of a medium conveying device including medium detectors according to a first embodiment.
[FIG. 3] FIG. 3 is a side-view for describing portions in the medium conveying device related to a first medium detector.
[FIG. 4] FIG. 4 is a side-view for describing portions in the medium conveying device related to a second medium detector.
[FIG. 5] FIGS. 5(A) and 5(B) are views for describing the principles underlying the operation of a medium detector, FIG. 5(A) being a view which illustrates a state in which a medium is detected, FIG. 5(B) being a view which illustrates a state in which a medium is not detected.
[FIG. 6] FIGS. 6(A), 6(B), 6(C), and 6(D) are views for describing a method for determining the shape of a medium guide including a reflection plate, FIG. 6(A) being a view which illustrates a light irradiation area of a reflective photosensor, FIG. 6(B) being a view which illustrates a reflected light diffusion area of the reflection plate, and FIGS. 6(C) and 6(D) being views each of which illustrates a reflected light diffusion area of the medium guide.
[FIG. 7] FIG. 7 is a view for describing a reflection plate included in a medium detector according to a second embodiment.

### Description of Embodiments

Embodiments will now be described in detail with reference to the drawings with a medium conveying device in particular in an automated teller machine which receives banknotes conveyed in a bundle and which sends them one by one as an example.

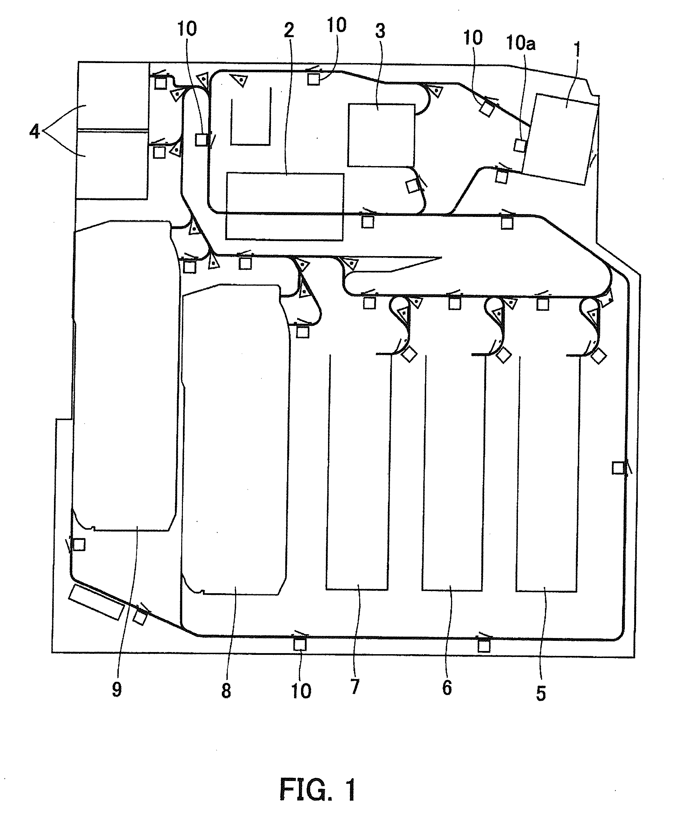

FIG. 1 illustrates an example of the internal structure of a banknote processing section of an automated teller machine.

An automated teller machine includes in its upper unit a banknote insertion and dispensing aperture 1 which receives and pays banknotes, a discrimination part 2 which determines the kind and genuineness of banknotes, and a temporary holding part 3 which holds received banknotes after determination, for example, until the conclusion of a transaction. In addition, the automated teller machine includes a reject part 4 which stores, at the time of the determination that banknotes are inadequate for reuse being made, the banknotes as bad banknotes and storage parts 5, 6, 7, 8, and 9 which store banknotes. The storage parts 5, 6, and 7 are used mainly for storing banknotes handled at the time of receipt and payment of money. On the other hand, the storage parts 8 and 9 are used for storing banknotes to supplement lack of banknotes in the storage part 5, 6, or 7 and for storing received banknotes at the time of the storage parts 5, 6, and 7 being full.

The banknote insertion and dispensing aperture 1, the discrimination part 2, the temporary holding part 3, the reject part 4, and the storage parts 5, 6, 7, 8, and 9 are connected to one another by a conveying path. A plurality of medium detectors 10 which detect the passage of a banknote are arranged at important positions along the conveying path. In addition, a medium detector 10a which detects the presence of absence of a banknote is arranged at the banknote insertion and dispensing aperture 1.

A case where two medium detectors are used in a medium conveying device (not illustrated) arranged close by the banknote insertion and dispensing aperture 1 along the conveying path from the banknote insertion and dispensing aperture 1 to the discrimination part 2 will now be described. The basic structure of the medium detectors 10 arranged along the conveying path for detecting the passage of a medium and the medium detector 10a arranged at the banknote insertion and dispensing aperture 1 is the same as that of the medium detectors used in the medium conveying device arranged close by the banknote insertion and dispensing aperture 1, so detailed descriptions of the medium detectors 10 and the medium detector 10a will be omitted.

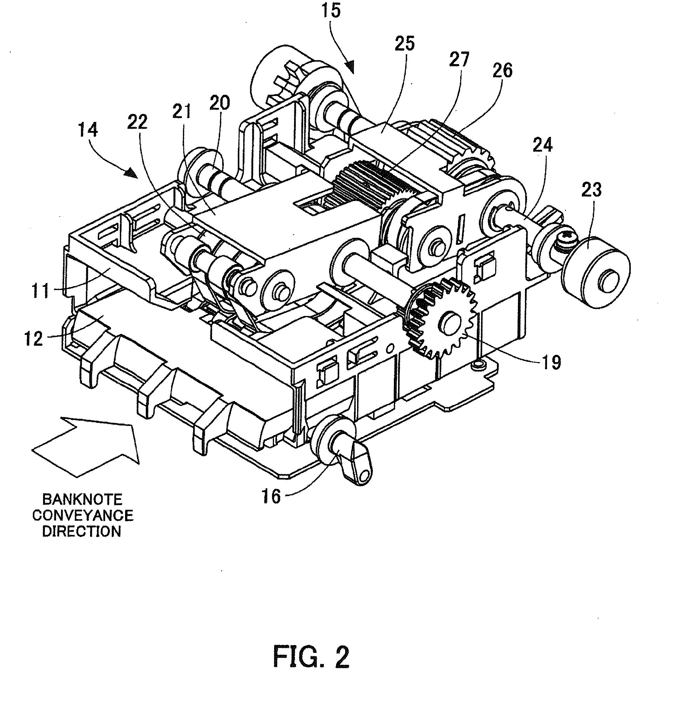

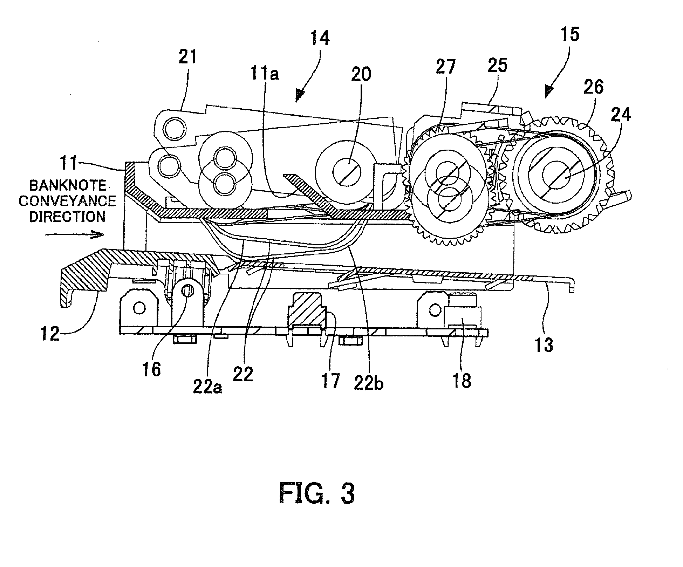

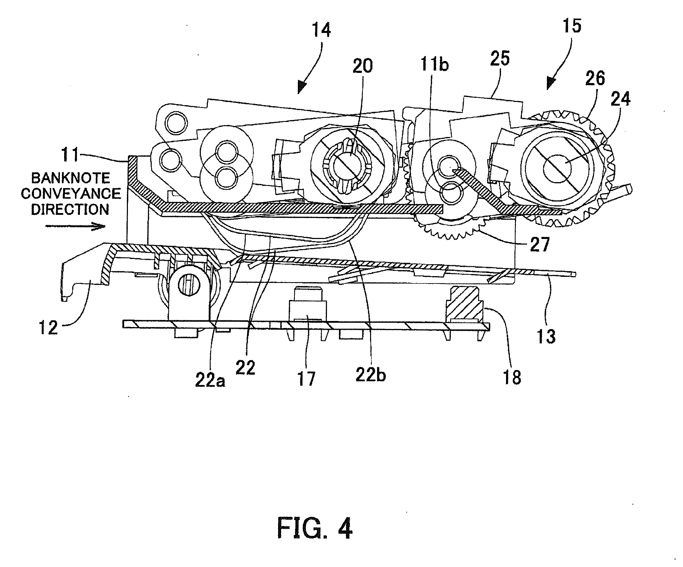

FIG. 2 is a perspective view which illustrates the appearance of a medium conveying device including medium detectors according to a first embodiment. FIG. 3 is a side-view for describing portions in the medium conveying device related to a first medium detector. FIG. 4 is a side-view for describing portions in the medium conveying device related to a second medium detector.

A medium conveying device includes a fixed medium guide 11 in the upper part and includes in the lower part a fixed medium guide 12 on a medium inlet side and a movable medium guide 13 on a medium outlet side. The medium guides 11, 12 and 13 form a conveying path of banknotes which are media. A conveyer belt unit 14 is placed on the medium inlet side over the medium guide 11 and a conveying roller unit 15 is placed on the medium outlet side over the medium guide 11. A pivot axis 16 to which an end portion on the medium inlet side of the medium guide 13 is connected is placed under the medium guide 12. The medium guide 13 is made to pivot around the pivot axis 16. By doing so, the height on the medium outlet side of the conveying path is controlled. Reflective photosensors 17 and 18 are placed under the medium guide 13. Each of the reflective photosensors 17 and 18 includes, for example, a light emitting portion and a light receiving portion which are accommodated in the same package. In this embodiment description will be given on the assumption that a light emitting portion and a light receiving portion included in each reflective photosensor are accommodated in the same package. However, a light emitting portion and a light receiving portion included in each reflective photosensor may be accommodated in different packages. A light emitting portion and a light receiving portion included in each of the reflective photosensors 17 and 18 are faced toward the medium guide 11. The reflective photosensors 17 are placed apart from the reflective photosensors 18 in a banknote conveyance direction. The reflective photosensors 17 are placed apart from one another in a crosswise direction of the conveying path and the reflective photosensors 18 are placed apart from one another in the crosswise direction of the conveying path. The medium guide 11 has a reflection plate 11a, which is used as a reflection portion, at a position opposite the reflective photosensors 17 on the medium inlet side and has a reflection plate 11b, which is used as a reflection portion, at a position opposite the reflective photosensors 18 on the medium outlet side. The reflection plates 11a and 11b are formed so as to have the following shapes. Portions of the medium guide 11 opposite the reflective photosensors 17 and 18 are cutting and are bending at determined angles toward the outside of the conveying path. The reflective photosensors 17 on the medium inlet side and the reflection plate 11a make up a first medium detector and the reflective photosensors 18 on the medium outlet side and the reflection plate 11b make up a second medium detector.

The conveyer belt unit 14 placed on the medium inlet side has a rotation axis 20 to whose one end a power transmission gear 19 is fixed. A frame 21 is attached to the rotation axis 20 so as to freely pivot. There is a conveyer belt 22 looped on a pulley (not illustrated), which is attached to the rotation axis 20, and a pulley (not illustrated), which is attached to the frame 21 on the medium inlet side, in the frame 21. When the frame 21 pivots around the rotation axis 20 and the medium inlet side of the frame 21 goes up, the conveyer belt 22 hangs down into the conveying path (22a in FIGS. 3 and 4). When the medium inlet side of the frame 21 goes down, the conveyer belt 22 hangs down to a position at which it touches the medium guide 13 (22b in FIGS. 3 and 4). As illustrated in FIG. 3, the reflection plate 11a of the medium guide 11 included in the first medium detector is formed in a space in which the reflection plate 11a does not interfere with any components of the conveyer belt unit 14 even at the time of the frame 21 pivoting around the rotation axis 20.

The conveying roller unit 15 placed on the medium outlet side has a rotation axis 24 to whose one end a power transmission pulley 23 is fixed. A frame 25 is attached to the rotation axis 24 so as to freely pivot. A conveying roller 26 is attached to the rotation axis 24 and a conveying roller 27 is attached to the frame 25. When the frame 25 pivots around the rotation axis 24 and the medium inlet side of the frame 25 goes up, the conveying roller 27 is at a position at which the conveying roller 27 shunts from the conveying path. When the medium inlet side of the frame 25 goes down, the conveying roller 27 is at a position at which the conveying roller 27 enters into the conveying path. As illustrated in FIG. 4, the reflection plate 11b of the medium guide 11 included in the second medium detector is formed in a space in which the reflection plate 11b does not interfere with any components of the conveying roller unit 15 even at the time of the frame 25 pivoting around the rotation axis 24.

It is assumed that a plurality of banknotes are conveyed in a bundle in the banknote conveyance direction along the conveying path in the medium conveying device having the above structure. When these banknotes are detected by the reflective photosensor 17 on the medium inlet side, the conveyer belt 22 is driven in the banknote conveyance direction and is lowered downward. As a result, conveyance force is given to the banknotes by the conveyer belt 22 and the banknotes are conveyed forward. When the banknotes are detected by the reflective photosensor 18 on the medium outlet side, the conveying rollers 26 and 27 are driven in the banknote conveyance direction and the conveying roller 27 is lowered. At the same time the medium guide 13 is driven in a direction in which the conveying path is narrowed, and the movement of the conveyer belt 22 is stopped. As a result, the banknotes are put between the conveying roller 27 and the medium guide 13, are sent one by one from the top by the conveying roller 27, are sent by the conveying roller 26, and are passed to a next conveying path.

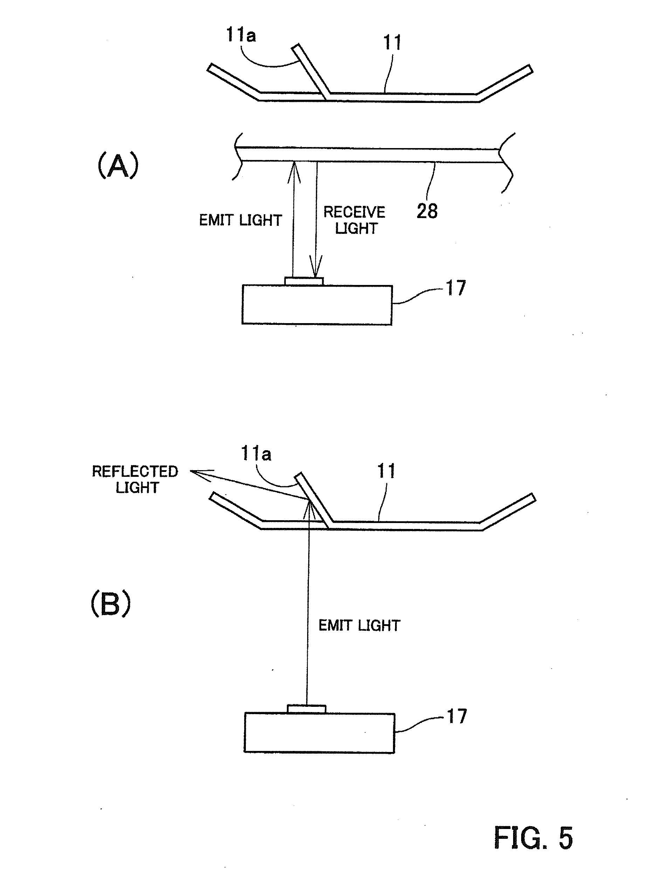

FIGS. 5(A) and 5(B) are views for describing the principles underlying the operation of a medium detector. FIG. 5(A) is a view which illustrates a state in which a medium is detected. FIG. 5(B) is a view which illustrates a state in which a medium is not detected. The principles underlying the operation of the first medium detector will now be described. However, the same applies to the other medium detectors including the second medium detector.

The medium detector includes the reflective photosensor 17 and the reflection plate 11a formed integrally with the medium guide 11 arranged opposite the reflective photosensor 17 with the conveying path of banknotes 28 between. A surface of the reflection plate 11a which reflects light emitted from the reflective photosensor 17 is mirror-finished. That is to say, if the medium guide 11 is, for example, a metal plate, then the reflecting surface of the reflection plate 11a is mirror-finished by mirror polishing or the like. If the medium guide 11 is resin, then the reflecting surface of the reflection plate 11a is mirror-finished by metal deposition or the like. In addition, the reflecting surface of the reflection plate 11a may be grain-finished to irregularly reflect light emitted from the reflective photosensor 17.

As illustrated in FIG. 5(A), when the banknotes 28 are passing along the conveying path in the medium detector, light emitted by a light-emitting element of the reflective photosensor 17 strikes the banknotes 28 and light reflected from the banknotes 28 is received by a light receiving element. By doing so, the reflective photosensor 17 detects the presence of the banknotes 28.

Furthermore, as illustrated in FIG. 5(B), when the banknotes 28 are not present between the reflective photosensor 17 and the medium guide 11, light emitted by the light-emitting element of the reflective photosensor 17 travels to the reflection plate 11a and is reflected from the reflection plate 11a. Light reflected from the reflection plate 11a is directed in a direction corresponding to an angle of the reflection plate 11a with the medium guide 11 and does not return to the reflective photosensor 17. The light receiving element does not receive light reflected from the reflection plate 11a, so the reflective photosensor 17 detects the absence of the banknotes 28.

The medium detector uses a part of the medium guide 11 as the reflection plate 11a. Therefore, costs are low compared with a case where the function of the reflection plate 11a is newly realized by adding another part. In addition, the angle of the reflection plate 11a with the medium guide 11 may be set to any value greater than 0 degree and less than 90 degrees as long as light reflected from the reflection plate 11a does not return directly to the light receiving element of the reflective photosensor 17. Actually, the angle of the reflection plate 11a with the medium guide 11 is determined according to the characteristics of the reflective photosensor 17.

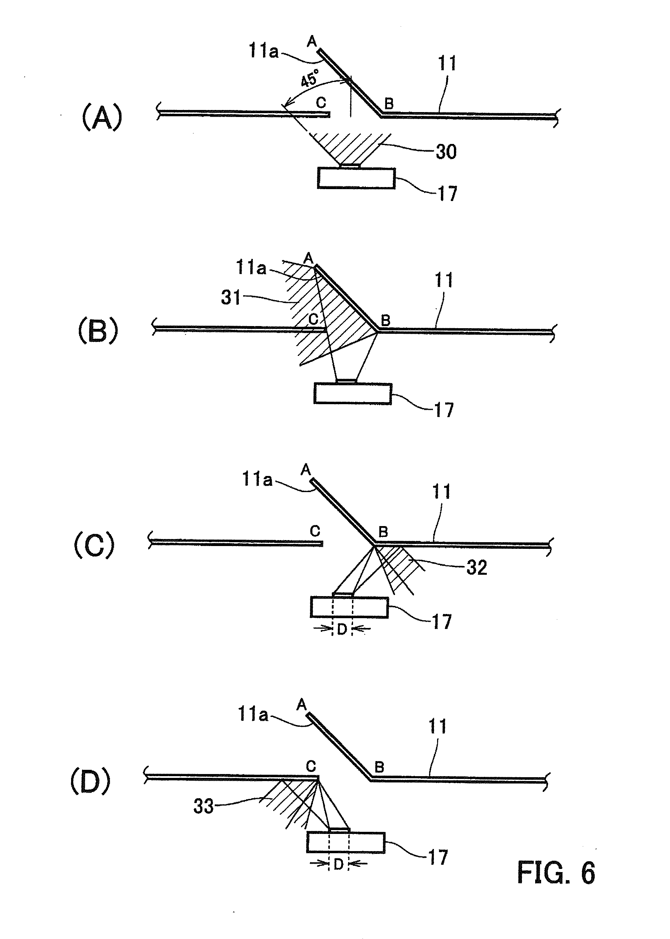

FIGS. 6(A), 6(B), 6(C), and 6(D) are views for describing a method for determining the shape of a medium guide including a reflection plate. FIG. 6 (A) is a view which illustrates a light irradiation area of a reflective photosensor. FIG. 6(B) is a view which illustrates a reflected light diffusion area of the reflection plate. FIGS. 6(C) and 6(D) are views each of which illustrates a reflected light diffusion area of the medium guide.

It is assumed that the position of an end of the reflection plate 11a included in the medium guide 11 is position A, that the position of a base end of the reflection plate 11a at which the medium guide 11 and the reflection plate 11a are connected is position B, and that the position of an end of the medium guide 11 opposite position B with an aperture through which light passes between is position C.

Light emitted by the light-emitting element of the reflective photosensor 17 does not travel straight in a certain direction but diverges to some extent and travels according to the characteristics of the element and a lens. As illustrated in FIG. 6(A), for example, it is assumed that the light-emitting element of the reflective photosensor 17 has a divergence characteristic of 45 degrees with an optical axis. As a result, the light-emitting element of the reflective photosensor 17 emits light in a light irradiation area 30 indicated by oblique lines. In addition, it is assumed that the distance between the reflective photosensor 17 and the medium guide 11 is in the range of detection distance of the reflective photosensor 17.

Of light in the light irradiation area 30 emitted from the reflective photosensor 17, light reflected from the reflection plate 11a travels in a reflected light diffusion area 31 indicated by oblique lines in FIG. 6(B). Furthermore, of light in the light irradiation area 30 emitted from the reflective photosensor 17, light reflected from the medium guide 11 on a position B side travels in a reflected light diffusion area 32 indicated by oblique lines in FIG. 6(C). In addition, of light in the light irradiation area 30 emitted from the reflective photosensor 17, light reflected from the medium guide 11 on a position C side travels in a reflected light diffusion area 33 indicated by oblique lines in FIG. 6(D).

According to the above description, as can be seen from FIG. 6(B), it is desirable to set the angle of the reflection plate 11a with the medium guide 11 so that the position of the light receiving element of the reflective photosensor 17 will not fall within the reflected light diffusion area 31. In addition, as can be seen from FIGS. 6(C) and 6(D), positions B and C of the medium guide 11 can be set anywhere outside width D of the light-emitting element. By doing so, light which is emitted by the light-emitting element of the reflective photosensor 17 and which is reflected from the reflection plate 11a does not reliably return directly to the light receiving element.

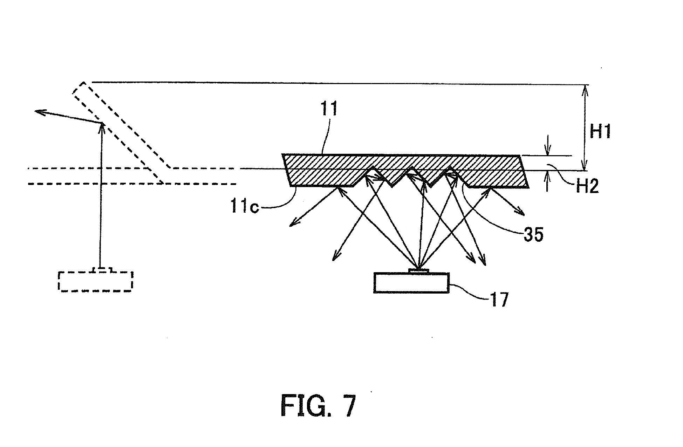

FIG. 7 is a view for describing a reflection plate included in a medium detector according to a second embodiment.

A medium detector according to a second embodiment includes a reflection portion which is suitable to a case where there is no space outside a medium guide 11 (on an upper side in FIG. 7) for a reflection plate 11a. With this reflection portion a plurality of V-shaped grooves 35 are arranged close in a surface 11c of the medium guide 11 opposite a reflective photosensor 17. A section of the reflection portion has a saw-toothed shape. That is to say, the reflection portion has a shape in which minute reflection plates 11a included in the medium detector according to the first embodiment are spread. As a result, light emitted by a light-emitting element of the reflective photosensor 17 is reflected from inner surfaces of the V-shaped grooves 35 and diffuses into a conveying path. Therefore, light reflected from the inner surfaces of the V-shaped grooves 35 does not directly reach a light receiving element and the reflective photosensor 17 does not erroneously detects the medium guide 11.

The reflection portion of the medium detector is formed in the inner surface 11c (on a lower side in FIG. 7) of the medium guide 11. This reduces a space occupied by the medium guide 11. With the medium detector according to the first embodiment, for example, a space corresponding to height H1 is required outside the medium guide 11 (on the upper side in FIG. 7). With the medium detector according to the second embodiment, however, only a space corresponding to small height H2 is required. In addition, height H2 can practically be made zero by shallowing the V-shaped grooves 35 and making them have minute shapes. It is also desirable to perform surface treatment after resin molding on the reflection portion made up of the V-shaped grooves 35 cut in the medium guide 11 by the use of a material having a high reflection factor.

### Industrial Applicability

In the above embodiments application to a medium conveying device in an automated teller machine is described. However, the present invention can be applied in the same way to uses, such as detection of the passage of or the presence or absence of media in printers, copy machines, facsimile machines, and the like which handle paper media.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Reference Signs List

1 banknote insertion and dispensing aperture
2 discrimination part
3 temporary holding part
4 reject part
5, 6, 7, 8, and 9 storage part
10 and 10a medium detector
11, 12, and 13 medium guide
11a and 11b reflection plate
11c surface
14 conveyer belt unit
15 conveying roller unit
16 pivot axis
17 and 18 reflective photosensor
19 power transmission gear
20 rotation axis
21 frame
22 conveyer belt
23 power transmission pulley
24 rotation axis
25 frame
26 and 27 conveying roller
28 banknotes
30 light irradiation area
31, 32, and 33 reflected light diffusion area
35 V-shaped grooves

## Claims

1. A medium detector which detects paper sheet media, the medium detector comprising:
a reflective photosensor placed so as to face the paper sheet media to be detected by a light emitting portion and a light receiving portion; and
a reflection portion which is formed in a medium guide placed opposite the reflective photosensor with the paper sheet media between and which reflects light emitted from the light emitting portion in a direction in which the light emitted from the light emitting portion does not return to the light receiving portion.

2. The medium detector according to claim 1, wherein the reflection portion has a shape formed by cutting a portion of the medium guide opposite the reflective photosensor and bending the portion of the medium guide opposite the reflective photosensor at a determined angle to a side opposite a side on which the reflective photosensor is placed.

3. The medium detector according to claim 2, wherein a surface of the reflection portion which reflects light emitted from the reflective photosensor is mirror-finished.

4. The medium detector according to claim 2, wherein a surface of the reflection portion which reflects light emitted from the reflective photosensor is grain-finished.

5. The medium detector according to claim 1, wherein a plurality of V-shaped grooves are arranged close in a surface of the medium guide opposite the reflective photosensor as the reflection portion.

6. A medium conveying device which conveys paper sheet media, the device comprising:
first and second medium guides which are arranged on both sides of the paper sheet media conveyed so as to form a conveying path of the paper sheet media;
a reflective photosensor which is placed under the first medium guide and whose light emitting and light receiving portions are arranged so as to face the second medium guide; and
a reflection portion which is integrally formed with the second medium guide and which reflects light emitted from the light emitting portion in a direction in which the light emitted from the light emitting portion does not return to the light receiving portion.
